Europäisches Patentamt

European Patent Office

Office européen des brevets

(11) Publication number : **0 482 832 A1**

# EUROPEAN PATENT APPLICATION

(21) Application number : **91309616.0**

(22) Date of filing : **17.10.91**

(51) Int. Cl.⁵ : **A01K 27/00**

(30) Priority : **23.10.90 GB 9022976**

(43) Date of publication of application :
**29.04.92 Bulletin 92/18**

(84) Designated Contracting States :
**AT BE CH DE DK ES FR GB GR IT LI LU NL SE**

(71) Applicant : **Grayson, George**
**16 Boroughbridge Road**
**Northallerton, North Yorkshire DL7 8BE (GB)**

(72) Inventor : **Grayson, George**
**16 Boroughbridge Road**
**Northallerton, North Yorkshire DL7 8BE (GB)**

(74) Representative : **Virr, Dennis Austin**
**URQUHART-DYKES & LORD 3rd Floor, St.**
**James House 139 Albert Road**
**Middlesbrough Cleveland TS1 2PP (GB)**

(54) **Multi-function dog lead.**

(57) A dog lead, devised to be able to adopt several different formats to enable it to be used in different ways and at different lengths, takes the form of an elongated narrow length (10) of flexible material, folded at one end to form a handhold (11) and fitted with an attachment means such as a spring clip (14) at its other end. A first rigid ring (13) which encircles the lead and can slide along the handhold, and a second rigid ring (15) mounted upon the lead at a distance from the attachment means (14), enable the lead to be converted readily among its different possible formats.

FIG.1.

Jouve, 18, rue Saint-Denis, 75001 PARIS

EP 0 482 832 A1

The present invention is a multi-function lead, devised for use with dogs but suitable for use with other animals, especially pet animals, if desired.

A dog lead at its simplest takes the form of an elongated narrow length of a flexible material, for example webbing, leather or rope, one end of which is shaped to form a handhold and the other being provided with a clip or other means of attachment to a collar or harness worn by the dog. In different situations, for example whether the dog is being trained or merely exercised, the lead may be required to be of different lengths; for this purpose, different leads will therefore normally be used.

For simply walking with a dog, leads are available which are retained in a hand-held housing from which the lead can be withdrawn to the desired extent to allow the dog to walk nearer to or further from the accompanying walker. However, such leads are not intended for use when training a dog and are not suitable for that purpose.

Another form of dog lead is available, and is described in US-A-4763609, which consists of three sections joined to each other by rings and has snap-on connectors at its outer ends. By connecting the connectors to further rings associated with the foregoing rings, the lead may be formed into alternative looped conditions and thereby effectively shortened. However this type of lead offers only a limited facility for shortening and requires an undue number of rings and connectors in its construction, which add to its cost of manufacture and also to its weight in use.

It is an object of the present invention to provide a dog lead which, while requiring fewer fittings in its construction, is readily shortened to two significantly shorter lengths, to enable it to perform a range of different functions.

The multi-function dog lead according to the present invention comprises an elongated length of a flexible material forming said lead, said material being folded upon itself at a first end thereof to form a closed loop by which the lead may be held, a first ring of rigid material encircling the lead within the length of said loop and free to move along the lead within that length, attachment means mounted within the region of the second end of said lead for attaching the lead to a dog, and a second ring of rigid material secured to the lead at a distance from said second end thereof, the minimum outer dimension of said first ring being greater than the maximum inner dimension of said second ring. By virtue of the foregoing features of the dog lead according to the invention, in particular the two rigid rings, the lead may be folded into various formations, of different lengths and suitable for performing a range of different functions, as will be described in greater detail hereinafter and include both training and exercise functions.

The flexible material of which the lead is formed may be any desired material having sufficient strength to restrain the dog with which the lead is to be used. Such materials include those of which conventional leads are formed, among which may be mentioned leather and rope. The preferred material, which combines the need for strength with both flexibility and lightness, is a fabric, especially a webbing, of natural or synthetic material, for example of cotton, acrylic, nylon, polyester, polypropylene or blends of two or more materials.

At a first end of the lead, the flexible material is folded upon itself to form a closed loop, which functions as the handhold for the user of the lead. Typically, the overall length of the loop, when laid flat, may be of the order of 15 to 25 cm, for example approximately 20 cm.

In the region of this first end of the lead, a first ring of rigid arterial encircles the lead within the length of the loop and is free to move along the lead within the limits imposed by the length of the loop. As will be apparent hereinafter, this first ring acts both as a guide in some of the orientations of the lead and also as a stop to limit the relative movement of different ports of the lead. The word "ring" is not intended to be interpreted narrowly as implying that the ring need be circular; it may be of some other closed shape, for example oval, square or D-shaped, but in general it is preferably generally circular in shape. Suitable materials for the ring include steel, aluminium, brass and nickel-plated or chromium-plated metal.

Within the region of the other end of the lead is provided the attachment means by which the lead is attached to the dog. The attachment means may be any convenient such means, including hooks, rings, spring clips and snap-links, such as may be used to detachably connect the lead to a collar or harness worn by the dog. The preferred attachment means is a snap-hook or a so-called "trigger clip", for connection to a ring on the collar or harness.

At a distance from the attachment means, a second rigid ring is mounted on the lead. The length of the lead between the attachment means and the second ring may form a convenient handhold close to the dog and with that in mind their distance apart may correspond approximately to the width of an adult hand. Thus typically that distance may be of the order of 10 to 15 cm, although distances outside this range are acceptable if desired. This short length of the lead may be modified or reinforced or otherwise made rigid or semi-rigid to assist in acting as such a handhold.

The second rigid ring may be made of the same materials as those from which the first ring may be formed. The two rings may be similar or different in shape but preferably either they are both circular or the first ring is circular and the second D-shaped. The least outer dimension (for example the outer diameter in the case of a circular ring) of the first ring should be greater than the greatest inner dimension (for example the inner diameter) of the second ring, since the first ring, in functioning as a stop, must not be able to pass through the second ring. This criterion may conveniently be met by the two rings being both circular and of the same size.

The overall length of the dog lead according to the invention is a matter of choice but a preferred length lies within the range from 1.0 to 2.5 metres, for example of the order of 2.0 metres. Typically, the lead, when in the form of leather or a fabric, may be of the order of 1.0 to 2.5 cm. wide. The materials of which it is constructed, as well as its dimensions, may be selected to reflect the size and class of dogs with which it is intended to be used.

In order to form the handhold and also in order to secure the attachment means and the second ring to the lead, it is necessary to affix one layer of the material of the lead to another such layer at appropriate points. This affixing together of layers may be achieved by means of stitching, staples or rivets for example but, when the material of the web is a synthetic polymeric material, the layers may advantageously be affixed together by thermal adhesion.

The invention will now be further described with reference to the accompanying drawings, which illustrate one preferred embodiment of the multi-function dog lead according to the present invention and wherein:-

Fig. 1 is a perspective illustration of the lead in a condition of maximum length;

Fig. 2 is a corresponding view of the lead in an intermediate-length condition;

Fig. 3 is a corresponding view of the lead in its condition of shortest length; and

Fig. 4 is a corresponding view of the lead in the form of an emergency slip collar.

The illustrated lead is formed of a continuous narrow length of webbing 10, folded at its upper end as shown to form a looped handle 11 secured by a rivet or stitching 12. The handle 11 is formed around a circular brass ring 13, identified hereinafter as the guide ring.

At the other end, the webbing is triple-folded to secure a brass trigger clip 14 and a second brass ring 15 within the folds at a distance apart of about 12 cm. Thus the webbing between the clip 14 and the ring 15 may function as a second handhold 16; for this purpose, the folds of webbing may be secured together by rivets or stitching 17, 18. In use of the lead, the trigger clip 14 is attached to a ring on a collar or harness worn by the dog.

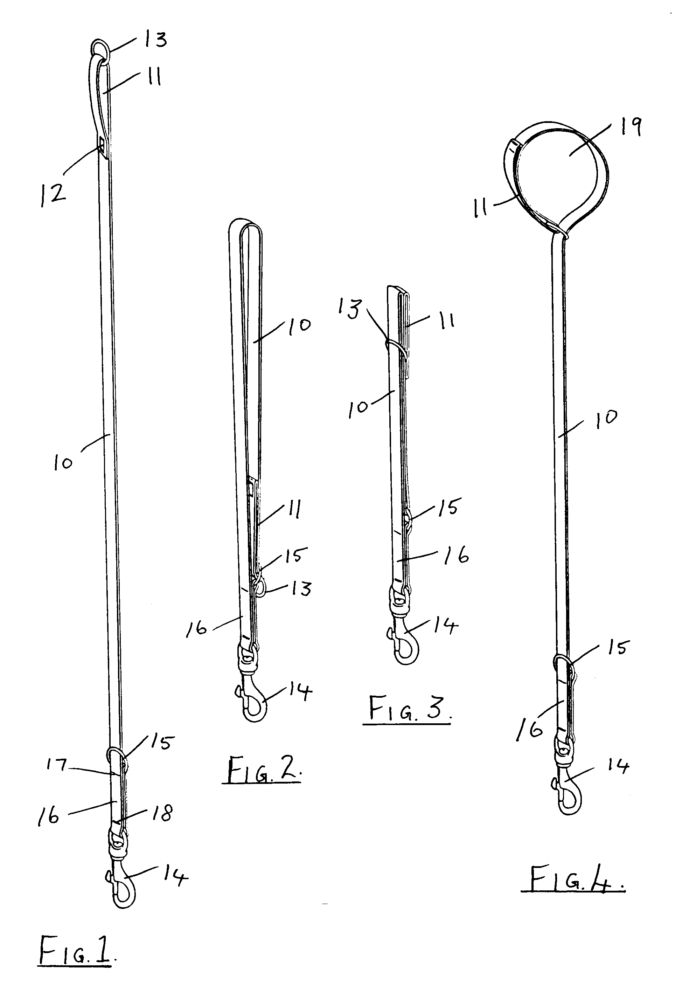

In its condition shown in Fig. 1, the lead may be used in a conventional manner for exercising or training a dog with the lead at its maximum length.

The lead is converted into its condition illustrated in Fig. 2 by drawing the main central part of the lead and also the handle 11 through the ring 15 until the guide ring 13 abuts the ring 15 and thereby acts as a stop. In this condition, the lead is looped back on itself as shown to form an intermediate-length lead of double thickness, suitable for exercising or training a dog on a shorter lead than that provided in the Fig. 1 condition. Extra grip is afforded by the double thickness of the lead or by looping the folded lead over the user's shoulder.

From the condition shown in Fig. 2, the lead may be further shortened to that shown in Fig. 3 by drawing the handle 11 out from within the ring 15 until the web 10 is folded into a triple thickness and then passing the guide ring 13 over the end of the folded web as illustrated. The guide ring 13 assists in retaining the web in its folded condition such that the lead is now of minimum length (approaching one third of its full length) and triple thickness. Thus the lead may now be used as an extra strong lead for close work in exercising or training a dog, in particular a stronger and/or taller dog. The extra thickness of the lead gives even better grip and control of the dog may be assisted by use of the second handhold 16.

In order to form the lead into its condition illustrated in Fig. 4, the lead is first placed in its maximum-length condition (Fig. 1) and then the web 10 is folded double just below the region of the handle 11 and the fold is passed through the guide ring 13. As shown in Fig. 4, a loop 19 is thus formed. In an emergency, this loop may function as a slip collar to secure a dog, for example a second dog while a first dog is secured by the trigger clip 14. Alternatively, the loop 11 may be enlarged and passed over the user's shoulder, thereby leaving both of his hands free for training and/or controlling a single dog on the clip 14.

As will be seen from the foregoing description with reference to the accompanying drawings, the dog lead according to the present invention can be converted very simply and quickly by the user into different formats which permit this single lead to be used for a range of different purposes in exercising, training or otherwise controlling dogs. When the lead is not in use, the trigger clip 14 may be clipped to the guide ring 13, thus forming the lead into a single large loop by which it may be carried over the shoulder.

The simple construction of the lead is suited for ready production in a range of dimensions and strengths to match the sizes and strengths of different dogs and different users.

## Claims

1. A multi-function dog lead comprising an elongated length (10) of a flexible material forming said lead, characterised in that said material is folded upon itself at a first end thereof to form a closed loop (11) by which the lead may be held, that said lead further comprises a first ring (13) of rigid material encircling the lead within the length of said loop and free to move along the lead within that length, attachment means (14) mounted within the region of the second end of said lead for attaching the lead to a dog, and a second ring (15) of rigid material secured to the lead at a distance from said second end thereof, and that the minimum outer dimension of said first ring (13) is greater than the maximum inner dimension of said second ring (15).

2. A dog lead according to claim 1, characterised in that the flexible material is leather or a webbing.

3. A dog lead according to either of the preceding claims, characterised in that the length of said closed loop (11), when laid flat, is of the order of 15 to 25 cm.

4. A dog lead according to any of the preceding claims, characterised in that the first ring (13) is circular and the second ring (15) is either circular or D-shaped.

5. A dog lead according to any of the preceding claims, characterised in that said attachment means (14) is a spring clip or a snap-hook or snap-link.

6. A dog lead according to any of the preceding claims, characterised in that the distance apart of said attachment means (14) and said second ring (15) is of the order of 10 to 15 cm.

7. A dog lead according to any of the preceding claims, characterised in that its overall length lies within the range from 1.0 to 2.5 metres.

8. A dog lead according to any of the preceding claims, characterised in that its width is of the order of 1.0 to 2.5 cm.

FIG.1.

FIG.2.

FIG.3.

FIG.4.

**European Patent Office**

## EUROPEAN SEARCH REPORT

Application Number

EP 91 30 9616

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 638 764 (ANDERSON)<br>* figures 1-5 *<br>--- | 1,2,4 | A01K27/00 |
| A,D | US-A-4 763 609 (KULIK)<br>* the whole document *<br>--- | 1 | |
| A | DE-U-8 811 994 (BLOMANN)<br>--- | | |
| A | US-A-2 861 547 (DALE)<br>----- | | |
| | | | TECHNICAL FIELDS SEARCHED (Int. Cl.5 ) |
| | | | A01K<br>B68B |

The present search report has been drawn up for all claims

| Place of search | Date of completion of the search | Examiner |
|---|---|---|
| THE HAGUE | 02 JANUARY 1992 | VON ARX V. U. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)